# EUROPEAN PATENT APPLICATION

(11) **EP 2 148 276 A1**
(43) Date of publication of application: **27.01.2010**
(21) Application number: 08305412.2
(22) Date of filing: 22.07.2008
(51) Int. Cl.: G06F 9/45

(54) **Mark-up language engine**

(71) Applicant: Gemalto SA, 92197 Meudon Cedex (FR)
(72) Inventor: Mauhourat, Arno C/O AXALTO SA, 92197, MEUDON CEDEX (FR)

(57) **Abstract**

The invention relates to a mark-up language engine which is intermediate software for automation of data processing for data having a mark-up language structure. More particularly, the invention is related to eXtensible Markup Language (XML) and XML-based languages. The engine according to the invention uses a tree-based structure that uses less memory than the original file. With such an engine, it is possible to have fast access to data and fast modification of data without the need of powerful processing means and without the need of a large memory.

## Description

### BACKGROUND OF THE INVENTION

### 1. Field of the Invention

The invention relates to a mark-up language engine. A Mark-up language engine is intermediate software for automation of data processing for data having a mark-up language structure. More particularly, the invention is related to extensible Markup Language (XML) and XML-based languages.

### 2. Related Art

The XML is a meta-markup language for text documents. Data are included in XML documents as strings of text. The data are surrounded by text markup that describes the data. An XML basic unit of data with its markup is called an element. The XML specification is a standard defined by the World Wide Web Consortium (W3C). The XML specification defines the exact syntax that the markup follows, how elements are delimited by tags, what a tag looks like, what names are acceptable for elements, where attributes are placed, and so forth.

More in details, XML specification defines that an element is demarcated by a start tag, such as <tagname>, and an end tag, such as </tagname>. The information between the start tag and the end tag constitutes the content of the element. For example, <lastname>Mauhourat</lastname> is an XML formatted for the name.

An element can be encapsulated into another element. An element can also be annotated with one or more attributes that contain metadata about the element and its content. For example, a record for an employee can be formatted as follow:

```
       <employee id="123456">
              <lastname>Mauhourat</lastname>
              <firstname>arno</firstname>
       </employee>
```

Such a record constitutes an element that comprises an attribute named "id" associated to a value "123456" that can identify the record, and two elements, one for the last name and another one for the first name. For building a file with all employees, the records are written in text mode one after the other.

For automation of data manipulation, Application Programming Interface (APIs) is used to parse XML documents. The APIs can be linear-parsing API or tree-based API.

A first example of a linear-parsing API is the Simple API for XML (SAX). The SAX interface comprises a forward-only reader that moves across a stream of XML data and "pushes" events of interest (e.g., the occurrence of a start tag indicating the beginning of an element) to registered event handlers (such as callback methods in an application) to parse the element's content. SAX allows an application to parse XML documents that are larger than the amount of available memory. Nevertheless, a modification of an XML document needs a large amount of memory for the editing the XML file. Another drawback is that the push model employed by the SAX interface requires the application to construct a complex state machine to handle all of the events for an XML document, even if the application is only interested in events related to a particular element in the document.

Another example of a linear-parsing API is the pull model used by the XMLPull API and the XMLReader of Microsoft's .Net Framework. Like the SAX reader, the pull model is a forward-only reader that moves across a stream of XML data. However, instead of pushing events, the pull model allows the application to process only the elements in the XML document that are of interest and to skip the other. As a result, in some cases the application can avoid having to construct the complete state machine to handle the events.

An example of a tree-based API is the Document Object Model (DOM) interface, which maps an XML document onto a hierarchical tree-based memory structure so that each element of the XML document occupies a node in the tree. This interface has the advantage of being very flexible and permits to modify the tree at any location and in any order. It also permits to perform complex queries on the document. However the DOM interface is usually slow and consumes large amounts of memory because the tree structure needs a larger amount of memory than the original XML file. To locate the content of just one element of an XML document requires constructing a parsing tree for the entire document in memory, and traversing the nodes to reach the node for the desired element.

The meta-markup languages are commonly used for Internet exchange of data. The use of engines for processing the XML or XML-based files needs a lot of memory in general. In addition, the comparison between linear-parsing API and tree-based API shows that the processing time is increased with models using less memory. So it is not possible to implement an XML engine into an embedded device with high resource constraint, like smart card for example.

### SUMMARY OF THE INVENTION

The invention provides a new kind of engine for processing meta-markup languages like XML. The engine according to the invention uses a tree-based structure that uses less memory than the original file. With such an engine, it is possible to have fast access to data and fast modification of data without the need of powerful processing means and without the need of a large memory.

In particular, the invention is a markup language engine that transforms a markup language file into a processing structure wherein the processing structure is a tree structure that has a memory size lower than the memory size of the markup language file.

Preferentially, the tree structure may comprise a plurality of nodes linked to each other, each node corresponding to a data type used in the markup language file and each node is identified by an integer. The data type includes at least one of the following items: an element, a string of characters, a text, a comment, an entity, a reference, a CDATA section, a processing instruction, an attribute, or an attribute value. The nodes may be stored sequentially in a memory and the position of the node in the tree structure may be determined by the position of the node in the memory taken into consideration with information related to the depth of the node in the tree structure.

According to a particular realization mode, the item associated with the node is written into a file dedicated to a specific type of items, and the node only contains a pointer into said dedicated file. Said dedicated file can be compressed. The compression of the dedicated file may be performed by suppression of redundant information and two pointers of two different nodes may point a same item in the dedicated file. A dedicated file is share between a volatile memory and a non-volatile memory, the space memory occupied by said dedicated file into the volatile memory being limited to a predetermined memory space.

According to another realization mode, the nodes may be stored in a non-volatile memory each time a predetermined number of node has been created in a volatile memory. A modification table can be created for memorizing discontinuity in the sequence of nodes stored in the non-volatile memory, said modification table indicating a virtual order of the stored nodes.

According another aspect, the invention also relates to a processing unit including at least one microprocessor and at least one memory. Said processing unit comprises in its memory, instructions to be executed by the microprocessor for performing a markup language engine as previously defined.

Several features can be used alone or in combination to compact the tree-based structure. In particular [insert of important dependent claims]

The invention will be better understood with regard to the following description and accompanying drawings where:
- Figure 1 shows an example of mapping an XML document onto a hierarchical tree-based memory structure;
- Figure 1a shows an example of coding a hierarchical tree-based memory structure;
- Figure 2 shows memory structures of hierarchical tree nodes;
- Figures 3a and 3b show an identifying method of nodes;
- Figure 4 is an example of a tree structure and its representation in a tree structure virtual file;
- Figures 5, 6 and 7 illustrate update steps of an XML document according to the invention.

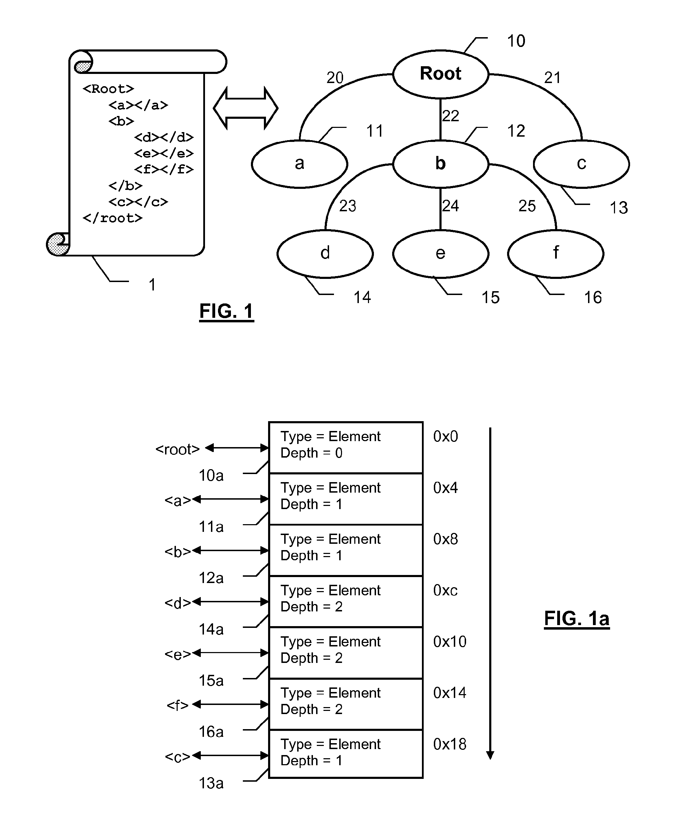

Figure 1 shows how to map an XML document or file 1 onto a hierarchical tree-based memory structure. Said XML document 1 contains several elements: a, b, c, d, e and f. The elements d, e and f are encapsulated into the element b. In an XML document, all elements are encapsulated into the mandatory element "Root". Using the Document Object Model (DOM) interface, it is possible to map said document 1 onto a hierarchical tree-based memory structure so that each element of the XML document occupies a node in the tree. Nodes 10, 11, 12, 13, 14, 15 and 16 are respectively dedicated to elements Root, a, b, c, d, e and f. Links 20, 21, 22, 23, 24 and 25 are used to specify the hierarchy between elements of the document 1. According to the example of Figure 1, the nodes 11, 12 and 13 are linked to node 10 to specify that elements a, b and c are encapsulated into the element Root in document 1. In order to specify that elements d, e and f are encapsulated into the element b, nodes 14, 15 and 16 are respectively linked to node 12 using links 23, 24 and 25.

The tree structure is composed of a set of nodes of fixed size that represent a flattened view of the tree. To be used into an embedded device, the nodes are stored in a virtual file that preferably consists in a Non-Volatile Memory (NVM) part and a Random Access Memory (RAM) part. A virtual file is a container for records. Such file can only grow; that means that nodes can only be appended to the end of the virtual file. Each of records is dedicated to a node. The RAM part serves as a cache and stores the most recently added records. When the cache is full, the entire cache can be flushed to the NVM. The size of the tree structure is thus limited by the available NVM.

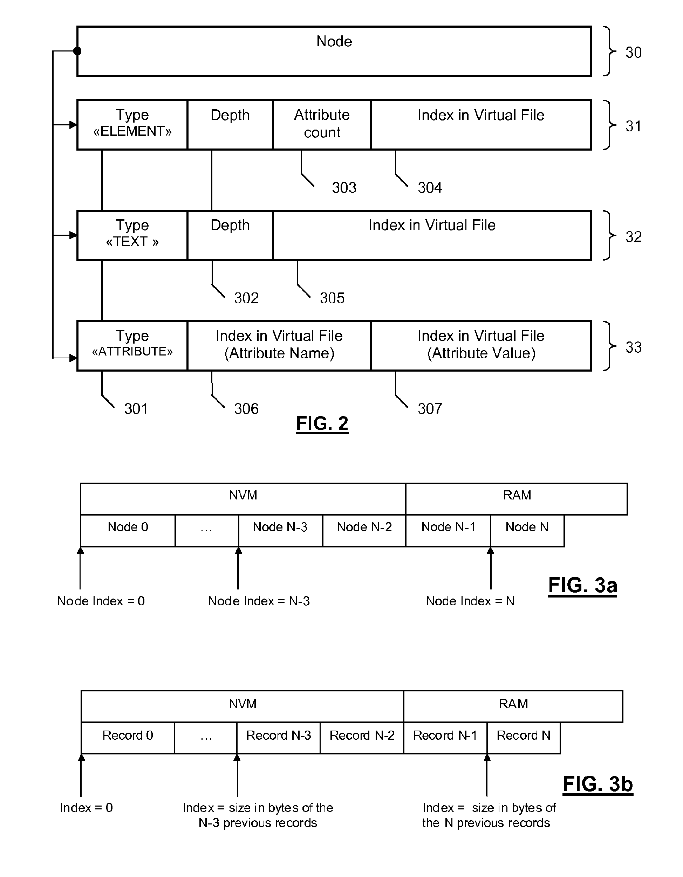

In a preferred embodiment, nodes are stored in a very compact manner using bit fields and their size is a multiple of 4 bytes in size. According to the invention, the DOM interface could be adapted to reference a node by using an integer. To save memory, it is possible code nodes in a virtual file following a "Depth-first Order" method. Figure 1a illustrates an example of embodiment where records contain information relative to nodes only. Using said method it is not necessary to code and store information about links 20 to 25. Records of a virtual file are created and initialized following a parsing method starting from the "Root" element, then the first child of said "Root" element, then the relatives of said element, then a sibling and its relatives and so on. Figure 1 a shows how to code the XML document 1. A first record 10a is created in a virtual file, record dedicated to the "Root" element or node 10 - Figure 2 shows details of a way of coding records, details being studied later on. Because said element is the root of the tree, the record 10a stores a "depth" information equal to 0. Then a record 11a is created in the virtual file, record dedicated to the element "a" or node 11 which is the first child of the "root" element. A "depth" information equal to 1 illustrates that element "a" is linked directly to the "root" element. Said element "a" or node 11 does not have relative. Another record 12a is then created being dedicated to the first sibling of element "a": the element "b" or node 12. Said element being linked to the "root" element, a "depth" information equal to 1 is stored in the record 12a to illustrate this hierarchy. The "b" element 12 has several children: elements "d", "e" and "f" or respectively nodes 14, 15, 16. After the creation of the record 12a, a record 14a is created being dedicated to the "d" element, first child of the element "b". A "depth" information equal to 2 is stored in the record 14a to illustrate this hierarchy. The element "d" or node 14 has no relative. Another record 15a is then created being dedicated to the first sibling of element "d": the element "e" or node 15. Said element being linked to the element "b", a "depth" information equal to 2 is stored in the record 15a to illustrate this hierarchy. The element "e" or node 15 has no relative. Another record 16a is then created being dedicated to the next sibling of element "d": the element "f" or node 16. Said element being linked to the element "b", a "depth" information equal to 2 is stored in the record 16a to illustrate this hierarchy. The element "f" or node 16 has no relative. Moreover the element "d" does not have additional sibling. Another record 13a is then created being dedicated to the next sibling of element "a": the element "c" or node 13. Said element being linked to the element "root", a "depth" information equal to 1 is stored in the record 16a to illustrate this hierarchy. The element "c" or node 13 has no relative. Moreover the element "a" does not have additional sibling. The virtual file update is over. Using this method we can see that it is useless to code information dedicated to links between nodes.

Figure 2 shows a sample coding for an element 31, a text 32 and an attribute 33. A node 30 is characterized by the use of a field 301 specifying the type of the node: "Element", "Text", "Attribute". In a preferred embodiment 3 bits out of the 32 available one could be dedicated to code the type. To keep track of the tree structure hierarchy, a "depth" field 302 is kept in the node's field 31 and 32 (for example using 5 bits). Also the attributes are next to their element. In a more common case, each node can be associated with a data type of the markup language. As an example, XML data types comprise : element, text, comment, attribute, attribute value, entity, reference, CDATA section and processing instruction. Of course, depending of the markup language, the data types may change.

Preferably, the nodes are identified using a unique index in the virtual file to guaranty that each node has a unique identifier as shown in Figure 3a. Also in this example, 4-byte node structures are used but this can be easily extended by using multiples of 4 bytes to reserve the desired maximum number of bits for the indices. To be able to access to node Node N-3 for instance, the index value would be N-3. As we explained above, a virtual file is a container of records. Figure 3b shows an equivalent view where a record is dedicated to a node. According to this figure, accessing to Node N-3 is possible using an index value equal to the size in bytes of the N-3 previous records. The node structure 30 contains a field 304 corresponding to the index into the virtual file of an "Element" type node 31. Same approach could be for a node 32 corresponding to a "Text" node where a field 305 id used to code the index in the virtual file. For an "attribute" node 33, a couple of fields 306 and 307 is necessary to code the index in the virtual file respectively of the name and of the value of the attribute. In a preferred embodiment 19, 24, 14 and 15 bits out of 32 are dedicated to respectively coding fields 304, 305, 306 and 307.

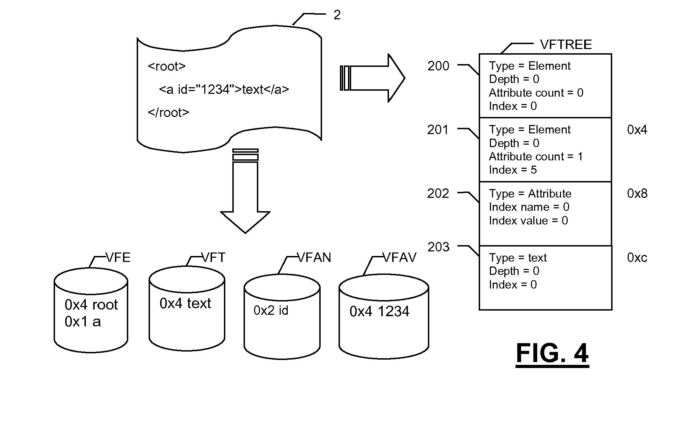

Figure 4 shows an example of coding an XML document 2. This document deals with a unique element "a" annotated with an attribute that contains metadata about the element and its content. Said attribute named "id" is associated to a value "1234" that can identify the record. Depending on implementations, the representation of tree with nodes and the contents such as element or attributes names or values could be recorded in a unique Virtual File or into several Virtual Files. In a preferred embodiment the virtual file VF is split into 5 parts: VFE for elements, VFT for texts, VFAN for the attribute names, VFAV for the attribute values and VFTREE for the nodes.

As written according to figure 2, fields 304, 305, 306 and 307 could contain indexes taking into account said split. For instance a field 304 could code an index in the VFE. Content information stored in said parts VFE, VFT, VFAN and VFAV could be coded using "length value" format. This way does not bring any limitation to the invention.

VFE contains a couple of records:
- "a" on 1 byte;
- "root" on 4 bytes.

VFT contains the record:
- "text" on 4 bytes.

VFAN contains the record:
- "id" on 2 bytes.

VFAV contains the record:
- "1234" on 4 bytes.

On the other hand, figure 4 shows how to code in the Virtual File VFTREE the tree structure using node structures of figure 2. According to a preferred embodiment nodes are coded using an integer (32 bits or 4 bytes).

The "root" node is coded by a structure 200 as the 31 one, with:
- a type field 301 equal to "Element" value;
- a depth field 302 equal to 0;
- an attribute counter field 303 equal to 0;
- an index 304 in VFE equal to 0 (first byte of VFE).

The "a" node is coded by a structure 201 as the 31 one, with:
- a type field 301 equal to "Element" value;
- a depth field 302 equal to 0;
- an attribute counter field 303 equal to 1;
- an index in VFE field 304 equal to 5 (fifth byte of VFE).

Then "id" attribute is coded by a structure 202 as the 33 one, with:
- a type field 301 equal to "Attribute" value;
- an index in VFAN field 306 equal to 0 (first byte of VFAN);
- an index in VFAV field 307 equal to 0 (first byte of VFAV).

Finally the "text" value is coded by a structure 203 as the 32 one, with:
- a type field 301 equal to "Text" value;
- a depth field 302 equal to 0;
- an index in VFT field 305 equal to 0 (first byte of VFT).

In a preferred embodiment the virtual file(s) could be compressed to save memory. For instance, the compression of the virtual file (VFE, VFT, VFAN, VFAV, VTREE) could be performed by suppression of redundant information such as indexes or pointers (304, 305, 306, 307) of different nodes pointing a same item a virtual file, same text or value... Splitting the virtual file as shown in Figure 4, could increase the compression rate.

In addition, for minimizing the space of the virtual files into the RAM, the virtual file can be shared between the RAM and the NVM. Such memory space management can be made each time the space in the RAM reaches a predetermined size. This can be made by swapping operation if the file is not compressed. If the virtual file is compressed, the virtual file may compress the virtual file by blocks each having a size lower than the predetermined size.

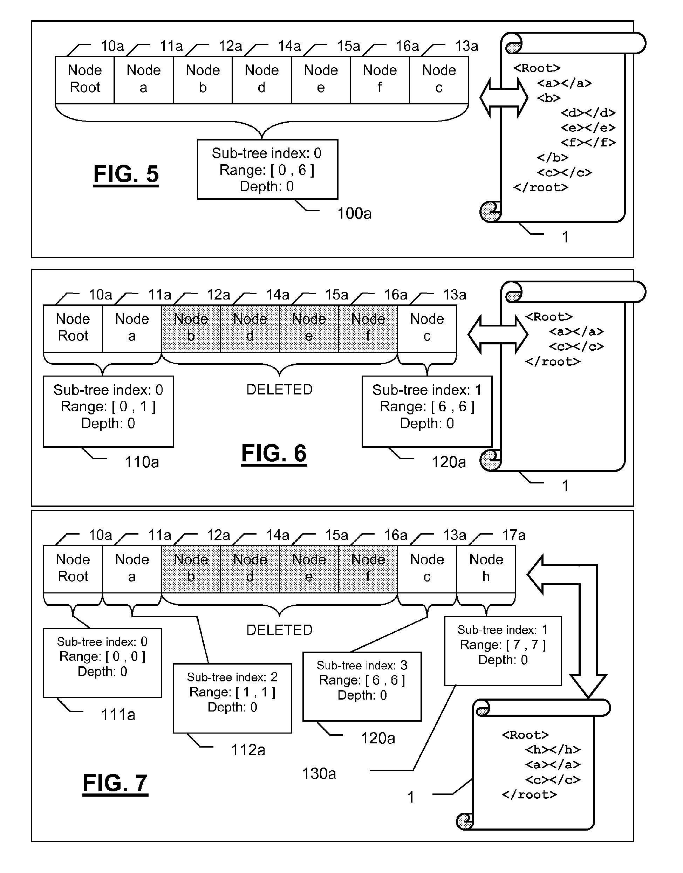

To be able to modify the tree without modifying the tree structure (only an append action is allowed), a notion of sub-tree could be used. A sub-tree is a section of the tree structure virtual file. For example, if a complete XML document 1 has been parsed without modification, the tree structure will have only one sub-tree that encompasses the whole tree as shown in Figure 5. In said example, the whole tree consists in 7 nodes, correspond to respectively elements "root", "a", "b", "c", "d", "e" and "f". Said nodes are associated to 7 records 10a to 16a. Associated to the sub-tree (sub-tree 0), a memory structure 100a with 3 fields specifies:
- a Depth level: 0 means that this sub-tree is directly connected to the Root);
- a list of nodes: coded using a range [0 , 6] value;
- an index: 0 for the first sub-tree.

Supposing that a branch (set of nodes) of the tree is deleted in the tree, a couple of sub-trees and as shown in Figure 6 will be defined. According to said figure, the element "b" and its relatives are deleted in the document 1. A first sub-tree encompasses nodes associated to elements "root" and "a" illustrated by records 10a and 11a. A second sub-tree 120 encompasses nodes associated to element "c" illustrated by record 13a. The nodes "b", "d", "e" and "f" illustrated by the records 12a, 14a, 15a and 16a dedicated to are not encompassed by any sub-tree showing that said records are useless. Data structures 110a and 120a are dedicated to said couple of sub-trees. Associated to the sub-tree 110, the memory structure 110a with 3 fields specifies:
- a Depth level: 0 means that this sub-tree is directly connected to the Root);
- a list of nodes: coded using a range [0 , 1] value meaning encompassing the records 10a and 11a;
- an index: 0 for the first sub-tree.

Associated to the sub-tree 120, the memory structure 120a with 3 fields specifies:
- a Depth level: 0 means that this sub-tree is directly connected to the Root);
- a list of nodes: coded using a range [6 , 6] value meaning encompassing only the records 13a (seventh record);
- an index: 0 for the first sub-tree.

Another example of modification of an XML document is illustrated by Figure 7. After the deletion of the element "b" and its relatives, an additional element "h" is inserted before the element "a". A new node has to be inserted in the tree and a record 17a is also inserted in the virtual file. The sub-tree 110 is replaced by a couple of sub-trees 111 and 112 associated to respectively data structure 111 a and 112b. The sub-tree encompassing record 13a (element "c") is kept and an additional sub-tree 130 is created encompassing the newer record 17a dedicated to the element "h". To precise the order of the elements in the document 1, an index value for the sub-trees is initialized specifying that the first sub-tree is 111 (data structure 111 a), then 130 (data structure 130a), then 112 (data structure 112a) and finally 120 (data structure 120a).

A sub-tree structure could be a limited structure, limited in size and declared in RAM only. This limitation is not for the number of additional nodes added to the tree as when consecutive nodes are added, the sub-tree range only needs to be updated: as shown above the creation of new sub-trees happens only when a sub-tree is modified in its "middle" (creation or deletion of nodes).
In order to permit "infinite" random modification, that is "infinite" modification to the tree, this structure could also be extended over NVM. For instance, when the RAM is overloaded, an embodiment would consist in a step of re-creation of the tree (update and cleaning of the virtual file) followed by a step of creation of a unique sub-tree encompassing all nodes.

In order to code and facilitate the management of sub-trees, data structures such as 110a, 120a, 111 a or 112a could stores additional information pointing to the previous and or the next data structure to perform chained list management.

## Claims

1. Markup language engine that transforms a markup language file (1, 2) into a processing structure wherein the processing structure is a tree structure that has a memory size lower than the memory size of the markup language file.

2. Markup language engine according to claim 1, wherein the tree structure comprises a plurality of nodes (10, 11, 12, 13, 14, 15, 16) linked to each other, each node corresponding to a data type used in the markup language file and wherein each node is identified by an integer (31, 32, 33).

3. Markup language engine according to claim 2, wherein the data type includes at least one of the following items (30): an element (31), a string of characters (32), a text, a comment, an entity, a reference, a CDATA section, a processing instruction, an attribute (33), or an attribute value.

4. Markup language engine according to claim 2, wherein the nodes are stored sequentially in a memory and wherein the position in the tree structure is determined by the position of the node in the memory taken into consideration with information related to the depth (302) of the node in the tree structure.

5. Markup language engine according to claim 2, wherein the item associated with the node is written into a file (VFTREE, VFE, VFT, VFAN, VFAV) dedicated to a specific type of items, and wherein, the node only contains a pointer (304, 305, 306, 307) into said dedicated file.

6. Markup language engine according to claim 5, wherein said dedicated file (VFE, VFT, VFAN, VFAV, VFTREE) is compressed.

7. Markup language engine according to claim 6, wherein the compression of the dedicated file (VFE, VFT, VFAN, VFAV, VTREE) is performed by suppression of redundant information and wherein two pointers (304, 305, 306, 307) of two different nodes are pointing a same item in the dedicated file.

8. Markup language engine according to claim 5, wherein a dedicated file is share between a volatile memory and a non-volatile memory, the space memory occupied by said dedicated file into the volatile memory being limited to a predetermined memory space.

9. Markup language engine according to claim 4, wherein the nodes are stored in a non-volatile memory (VFTREE) each time a predetermined number of node has been created in a volatile memory and wherein a modification table (110a, 11 a, 112a, 120a) is created for memorizing discontinuity in the sequence of nodes stored in the non-volatile memory, said modification table indicating a virtual order of the stored nodes.

10. Processing unit including at least one microprocessor and at least one memory, wherein said processing unit comprises in its memory, instructions to be executed by the microprocessor for performing a markup language engine according to one of the claims 1 to 9.
